# EUROPÄISCHE PATENTSCHRIFT

(11) **EP 1 138 102 B1**
(45) Veröffentlichungstag und Bekanntmachung des Hinweises auf die Patenterteilung: **16.04.2003**
(21) Anmeldenummer: 00901541.3
(22) Anmeldetag: 13.01.2000
(51) Int. Cl.: H02G 3/04, B29C 49/00, F16L 11/11, F16L 7/00

(54) **VERFAHREN ZUR HERSTELLUNG EINES EINTEILIGEN HÜLL-WELLROHRES**
METHOD FOR PRODUCING A ONE-PIECE CORRUGATED JACKET-TUBE
PROCEDE POUR PRODUIRE UN TUBE DE GAINAGE ONDULE D'UNE SEULE PIECE

(30) Priorität: 06.02.1999 DE 19904977
(43) Veröffentlichungstag der Anmeldung: 04.10.2001
(73) Patentinhaber: Hegler, Ralph-Peter, Dr.-Ing., 97688 Bad Kissingen (DE); Bayerische Motoren Werke Aktiengesellschaft, 80788 München (DE)
(72) Erfinder: Hegler, Ralph Peter, 97688 Bad Kissingen (DE); Grössmaier, Maximilian, 83623 Dietramszell (DE)
(74) Vertreter: Rau, Manfred, Dr. Dipl.-Ing.
(86) Internationale Anmeldenummer: EP0000196
(87) Internationale Veröffentlichungsnummer: WO00046894

(56) Entgegenhaltungen:
- EP-A- 0 268 869
- EP-A- 0 859 440
- EP-A- 0 860 921
- WO-A-94/11663
- WO-A-98/32202
- DE-A- 3 405 552
- US-A- 4 986 575

## Beschreibung

Die Erfindung betrifft ein Verfahren zur Herstellung eines einteiligen Hüll-Wellrohres aus thermoplastischem Kunststoff nach dem Oberbegriff des Anspruches 1 und ein Verfahren zum Einlegen mindestens einer elektrischen Leitung in ein solches Hüll-Wellrohr nach dem Oberbegriff des Anspruches 2.

Ein Verfahren nach dem Oberbegriff des Anspruches 1 ist aus der WO98/32 202 bekannt. Hierbei wird das Hüll-Wellrohr in der Weise thermisch verformt, daß der erste gewellte Teil-Abschnitt bereits unmittelbar nach der Verformung radial außen auf dem zweiten gewellten Teil-Abschnitt liegt und in diesen eingreift. Es hat sich gezeigt, daß das Ineinandergreifen des ersten und des zweiten gewellten Teil-Abschnittes nicht mit der notwendigen radialen Vorspannung erfolgt. Dies kann zu einer leichten Spaltbildung führen, so daß elektrische Leitungen eventuell eingeklemmt oder beschädigt werden. Außerdem kann sich das Hüll-Wellrohr beim Biegen während des Verlegens, beispielsweise in einem Kraftfahrzeug, öffnen, wodurch die in ihm angeordneten elektrischen Leitungen austreten können. Auch dies kann zu Beschädigungen der elektrischen Leitungen führen.

Das Vorstehende gilt auch für das Hüll-Wellrohr, wie es aus der WO97/32 379 bekannt ist.

Der Erfindung liegt daher die Aufgabe zugrunde, das gattungsgemäße Verfahren so weiterzubilden, daß nach der Montage der elektrischen Leitungen die gewellten Teil-Abschnitte mit ausreichend großer radialer Vorspannung ineinander greifen.

Diese Aufgabe wird bei einem Verfahren nach dem Oberbegriff des Anspruches 1 durch die Merkmale im Kennzeichnungsteil des Anspruches 1 gelöst. Durch die erfindungsgemäßen Maßnahmen wird erreicht, daß der nach der Montage mindestens einer elektrischen Leitung und dem Verschließen des Hüll-Wellrohres radial außen liegende erste gewellte Teil-Abschnitt bei dem ein Zwischenprodukt bildenden Wellrohr vor der Montage der elektrischen Leitung radial innen liegt, so daß nach dem Ändern der radialen Lage der beiden Teil-Abschnitte zueinander diese mit großer radialer Vorspannung gegeneinander anliegen, und zwar in ihrer einander überlappenden Stellung.

Anspruch 2 gibt das Verfahren an, wie das nach Anspruch 1 hergestellte Wellrohr geöffnet und nach dem Einlegen mindestens einer elektrischen Leitung verschlossen wird.

Weitere Vorteile der Erfindung ergeben sich aus der nachfolgenden Beschreibung eines Ausführungsbeispieles der Erfindung anhand der Zeichnung. Es zeigt
- Fig. 1: ein ein erstes Zwischenprodukt bildendes Wellrohr in einer Seiten-Längs-Ansicht,
- Fig. 2: einen Querschnitt durch das Wellrohr entsprechend der Schnittlinie II-II in Fig. 1,
- Fig. 3: einen Querschnitt durch das Wellrohr entsprechend der Schnittlinie III-III in Fig. 2,
- Fig. 4: einen Querschnitt durch das Wellrohr entsprechend der Schnittlinie IV-IV in Fig. 2,
- Fig. 5: das Wellrohr in fertig montiertem Zustand in einer Seiten-Längsansicht,
- Fig. 6: einen Querschnitt durch das Wellrohr gemäß der Schnittlinie VI-VI in Fig. 5,
- Fig. 7: einen Querschnitt durch das Wellrohr entsprechend der Schnittlinie VII-VII in Fig. 6,
- Fig. 8: eine Anlage zur Herstellung eines Wellrohres nach den Fig. 1 bis 7,
- Fig. 9: einen Schnitt durch eine Abzugsvorrichtung gemäß der Schnittlinie IX-IX in Fig. 8,
- Fig. 10: einen Schnitt durch eine Nachform-Vorrichtung gemäß der Schnittlinie X-X in Fig. 8,
- Fig. 11: eine Draufsicht auf ein Montagewerkzeug,
- Fig. 12: eine Draufsicht auf das Wellrohr bei Einsatz des Montagewerkzeuges,
- Fig. 13: einen Schnitt durch das Wellrohr gemäß der Schnittlinie XIII-XIII in Fig. 12 und
- Fig. 14: einen Schnitt durch das Wellrohr gemäß der Schnittlinie XIV-XIV in Fig. 12.

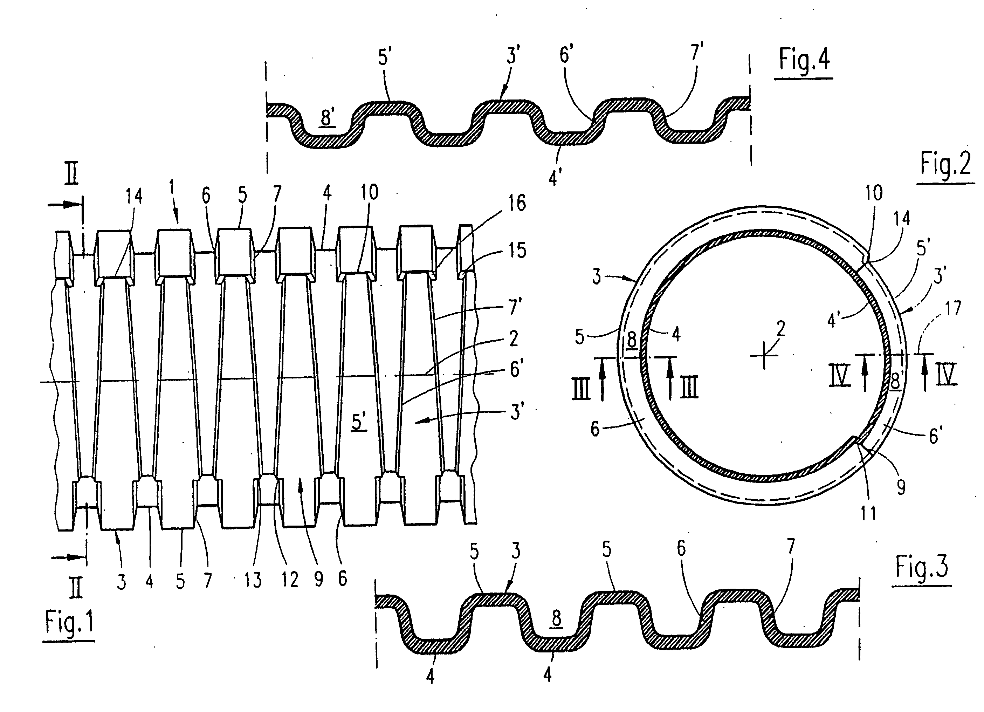

Das in den Fig. 1 bis 4 dargestellte, ein erstes Zwischenprodukt bildende Wellrohr 1 besteht aus einem bekannten thermoplastischen Kunststoff, beispielsweise Polyethylen, Polypropylen, Polyamid oder dergleichen. Es weist eine Mittel-Längs-Achse 2 auf, konzentrisch zu der das Wellrohr 1 mit gewellten Abschnitten 3 versehen ist, die sich etwa über Dreiviertel des Umfanges erstrecken, wie aus Fig. 2 hervorgeht. Diese gewellten Abschnitte 3 weisen konzentrisch zur Achse 2 verlaufende, im wesentlichen kreiszylindrische innere Rohrabschnitte 4 und ebenfalls konzentrisch zur Achse 2 verlaufende, im wesentlichen kreiszylindrisch ausgebildete äußere Rohrbereiche 5 auf. Ein innerer Rohrabschnitt 4 ist mit den benachbarten äußeren Rohrbereichen 5 jeweils mittels Flanken 6, 7 verbunden. Die mit einem äußeren Rohrbereich 5 verbundenen Flanken 6, 7 sind von der Achse 2 aus radial nach außen gesehen leicht aufeinanderzu geneigt, so daß zwischen einem äußeren Rohrbereich 5 und den sich an diesen anschließenden Flanken 6, 7 ein - von der Achse 2 aus gesehen - radial nach außen gegenüber den inneren Rohrabschnitten 4 zurückgesetzter Hohlraum 8 ausgebildet ist, der im Querschnitt etwa die Form eines sich zum Rohrbereich 5 erweiternden Trapezes aufweist, wie aus Fig. 3 ersichtlich ist. Diese in Fig. 2 oben und unten und links dargestellte Ausgestaltung eines Wellrohres 1 ist allgemein bekannt und in der Praxis allgemein üblich.

Wie aus den Fig. 1, 2 und 4 hervorgeht, weist das Wellrohr 1 etwa über ein Teil seines Umfanges gewellte Abschnitte 3' auf, die ebenfalls die inneren Rohrabschnitte 4 fortsetzende und über den Umfang schließende innere Rohrabschnitte 4', die äußeren Rohrbereiche 5 fortsetzende und über den Umfang schließende äußere Rohrbereiche 5' und die inneren Rohrabschnitte 4' mit den äußeren Rohrbereichen 5' verbindende Flanken 6' und 7' aufweisen. Der Querschnitt des im gewellten Abschnitt 3' ausgebildeten Hohlraumes 8' verändert sich über die Umfangserstreckung des gewellten Abschnittes 3'.

Die gewellten Abschnitte 3' weisen einen Anfang 9 auf, der in Fig. 1 und in Fig. 2 unten rechts dargestellt ist und der einem Ende des gewellten Abschnitts 3 entspricht. Der gewellte Abschnitt 3' weist weiterhin ein Ende 10 auf, das in Fig. 1 oben und in Fig. 2 oben rechts dargestellt ist und das dem anderen Ende des gewellten Abschnitts 3 entspricht. Wie aus den Fig. 1 und 2 hervorgeht, setzt sich am Anfang 9 der äußere Rohrbereich 5 eines gewellten Abschnittes 3 stetig in den äußeren Rohrbereich 5' des gewellten Abschnittes 3' fort. Dagegen ist der innere Rohrabschnitt 4' gegenüber dem inneren Rohrabschnitt 4 radial zur Achse 2 nach außen versetzt. Die Flanken 6' und 7' des gewellten Abschnitts 3' sind gegenüber den Flanken 6, 7 des sich anschließenden gewellten Abschnitts 3 in Achsrichtung versetzt. Der innere Rohrabschnitt 4' geht in den inneren Rohrabschnitt 4 mittels eines Übergangsabschnittes 11 über; die Flanken 6' und 7' gehen in die Flanken 6 bzw. 7 mittels Übergangsabschnitten 12, 13 über, die sich von den Flanken 6 bzw. 7 in Achsrichtung nach außen erstrecken.

Am Ende 10 der gewellten Abschnitte 3' geht deren innerer Rohrabschnitt 4' stetig in den sich anschließenden inneren Rohrabschnitt 4 des sich anschließenden gewellten Abschnittes 3 über, wie Fig. 2 entnehmbar ist. Dagegen springt der äußere Rohrbereich 5' gegenüber dem sich anschließenden Rohrbereich 5 radial nach innen zurück. Am Ende 10 geht der äußere Rohrbereich 5' mittels eines sich nach außen erstreckenden Übergangsabschnittes 14 in den sich anschließenden äußeren Rohrbereich 5 über. Weiterhin gehen die Flanken 6' und 7' mittels Übergangsabschnitten 15, 16 in die Flanken 6, 7 über, wobei sich die Übergangsabschnitte 15, 16 von den Flanken 6, 7 in Achsrichtung nach innen erstrecken.

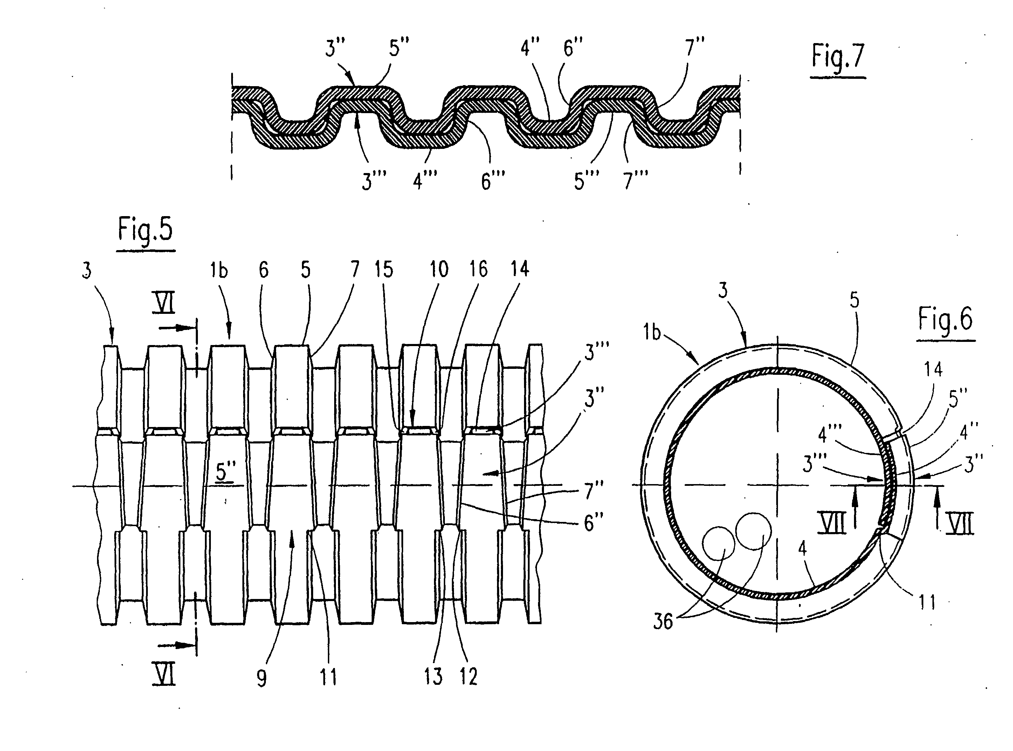

Wenn das Wellrohr 1 einseitig in der Mitte zwischen Anfang 9 und Ende 10 der gewellten Abschnitte 3' aufgeschnitten wird, und zwar in einer mit der Schnittlinie IV-IV in Fig. 2 zusammenfallenden Schnittebene 17, die auch durch die Achse 2 geht, dann werden jeweils aus einem gewellten Abschnitt 3' zwei gewellte Teil-Abschnitte 3" und 3''' gebildet, wobei der gewellte Teil-Abschnitt 3" sich vom Anfang 9 bis zur Schnittebene 17 und der gewellte Teilabschnitt 3''' sich von der Schnittebene 17 bis zum Ende 10 erstrecken. Der gewellte Teilabschnitt 3" weist entsprechend einen inneren Teil-Rohrabschnitt 4", einen äußeren Teil-Rohrbereich 5" und Teil-Flanken 6" und 7" auf. Der gewellte Teil-Abschnitt 3"' weist entsprechend einen inneren Teil-Rohrabschnitt 4"', einen äußeren Teil-Rohrbereich 5''' und Teil-Flanken 6''' und 7''' auf. Wenn - wie in den Fig. 5 bis 7 dargestellt - das in der Schnittebene 17 durchteilte Wellrohr 1 zusammengebogen wird, dann nimmt aufgrund der geschilderten Ausgestaltung der gewellten Abschnitte 3' der gewellte äußere Teil-Abschnitt 3" den gewellten inneren Teil-Abschnitt 3''' auf, und zwar derart, daß die inneren Teil-Rohrabschnitte 4" und 4''', die äußeren Teil-Rohrbereiche 5" und 5''' und die Teil-Flanken 6" und 6''' bzw. 7" und 7''' aneinanderliegen, wie es in Fig. 7 dargestellt ist. Weiterhin verläuft der innere Teil-Rohrabschnitt 4''' derart, daß er am Übergangsabschnitt 11 ohne gravierende Sprungstelle in den sich anschließenden inneren Rohrabschnitt 4 übergeht. Entsprechend weist der äußere Teilrohrbereich 5" am Übergangsabschnitt 14 keine gravierende radiale Sprungstelle gegenüber dem Teil-Rohrbereich 5 auf. Wie sich weiterhin aus Fig. 5 und 7 ergibt, gehen die Teil-Flanken 6" und 7" an den Übergangsabschnitten 15, 16 sprungstellenfrei in die Flanken 6, 7 über. Entsprechendes gilt für die Teil-Flanken 6''' und 7''' an den Übergangsabschnitten 12, 13.
Weitere Einzelheiten des Wellrohres 1, und zwar insbesondere dessen Maßverhältnisse, ergeben sich aus der WO98/32 202.

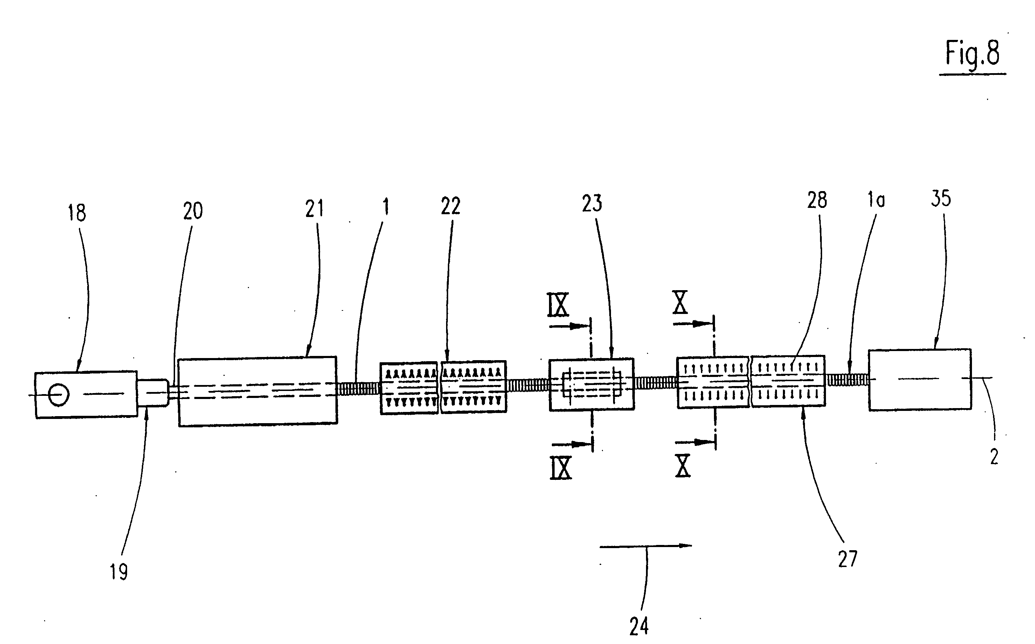

Die Herstellung des Wellrohres 1 erfolgt auf einer Anlage, die in Fig. 8 schematisch dargestellt ist. Eine solche Anlage weist einen Extruder 18 auf, aus dessen Extrusionsdüse 19 ein Schlauch 20 aus warmplastischem Kunststoff extrudiert wird.

Der Schlauch 20 wird in einer nachgeordneten Formmaschine 21 nach dem sogenannten Vakuumverfahren oder dem sogenannten Blasverfahren oder einem kombinierten Vakuum-Blas-Verfahren zu dem Wellrohr 1 verformt. Derartige Formmaschinen 21 sind beispielsweise aus den deutschen Patenten 1 203 940 und 1 211 789 (entspr. GB-PS 971021) allgemein bekannt. Aus der Formmaschine 21 tritt das Wellrohr 1 aus, das bereits eigenstabil ist.

Dieses Wellrohr 1 wird in einem nachgeordneten Kühlbad 22 mittels eines geeigneten Kühlmediums weiter abgekühlt. Hierbei kann es sich um Luft oder Wasser handeln. Derartige Kühlbäder 22 sind in der Praxis allgemein üblich und bekannt.

Dem Kühlbad 22 ist eine Band- oder Raupen-Abzugsvorrichtung 23 nachgeordnet, mittels derer das Wellrohr 1 in Produktionsrichtung 24 transportiert wird. Derartige Band- oder Raupen-Abzugsvorrichtungen 23 sind ebenfalls in der Praxis allgemein üblich und bekannt. In dieser Abzugsvorrichtung 23 ist auch noch eine Schneidvorrichtung vorgesehen, die im wesentlichen aus einem Messer 25 besteht, mittels dessen das Wellrohr 1 in der Schnittebene 17 längsgeschlitzt wird. Da ansonsten die Band- und Raupen-Abzugsvorrichtung 23 allgemein bekannt und in der Praxis verbreitet ist, sind die Abzugsbänder 26 nur schematisch angedeutet.

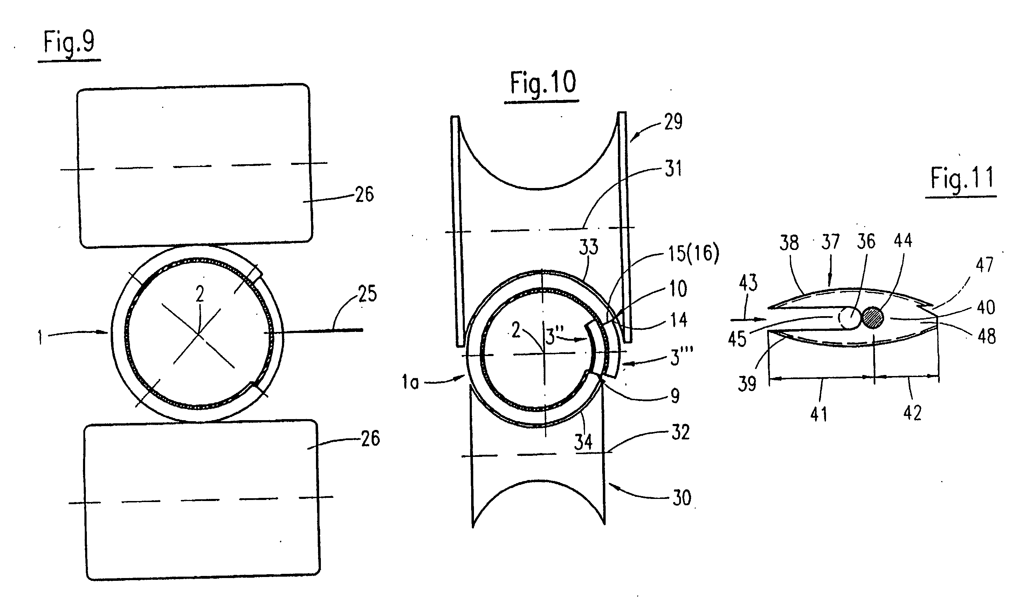

Der Abzugsvorrichtung 23 ist eine Nachform-Vorrichtung 27 in Produktionsrichtung 24 nachgeordnet, in der Heizungen 28 vorgesehen sind, mittels derer das Wellrohr 1 auf eine zur thermischen Nachverformung geeignete Temperatur erwärmt wird. In der Nachform-Vorrichtung 27 sind jeweils paarweise zueinander Verformungsrollen 29, 30 angeordnet, die quer zur Mittel-Längs-Achse 2 des Wellrohres 1 verlaufende Achsen 31, 32 aufweisen. Sie weisen weiterhin konkav, also nach innen zur jeweiligen Achse 31 bzw. 32 hin gewölbte Oberflächen 33, 34 auf, mittels derer das in der Schnittebene 17 geschlitzte Wellrohr 1 aus seiner in den Fig 1, 2 und 9 dargestellten ursprünglichen Form verformt wird. Die konkave Oberfläche 33 der Verformungsrolle 29 ist dabei so ausgebildet, daß sie im wesentlichen dem halbzylindrischen Außenumfang des Wellrohres 1 entspricht. Die Wölbung der Oberfläche 34 der Verformungsrolle 30 ist derart, daß das Wellrohr 1 benachbart zu den Teil-Abschnitten 3" in Richtung zur Achse 2 hin gebogen wird, so daß die gewellten Teil-Abschnitte 3" unter die gewellten Teil-Abschnitte 3''' geschoben werden, wie aus Fig. 10 ersichtlich ist. Die Verformung des Wellrohres 1 zu einem Wellrohr 1a, bei dem es sich um ein zweites Zwischenprodukt handelt, ist aus Fig. 10 ersichtlich. Die gewellten Teil-Abschnitte 3" erstrecken sich in Umfangsrichtung hierbei über die Übergangsabschnitte 14 ,15, 16 am Ende 10 hinaus. Das Wellrohr 1a wird anschließend auf einer üblichen Wickel-Vorrichtung 35 aufgewickelt.

Das fertige Wellrohr 1b wie es in den Fig. 5 und 6 dargestellt ist, dient als Hüll-Wellrohr für elektrische Leitungen 36 oder dergleichen, von denen einige in Fig. 6 dargestellt sind. Die in das Wellrohr 1a einzubringenden Leitungen 36 werden einschließlich der Steckverbindungen vorpositioniert. Dann wird das jeweilige Wellrohr 1a mittels einem entsprechenden Montagewerkzeug 37 im Bereich der gewellten Teil-Abschnitte 3" und 3''' etwa radial zur Achse 2 geöffnet und der Strang aus Leitungen 36 eingeführt.

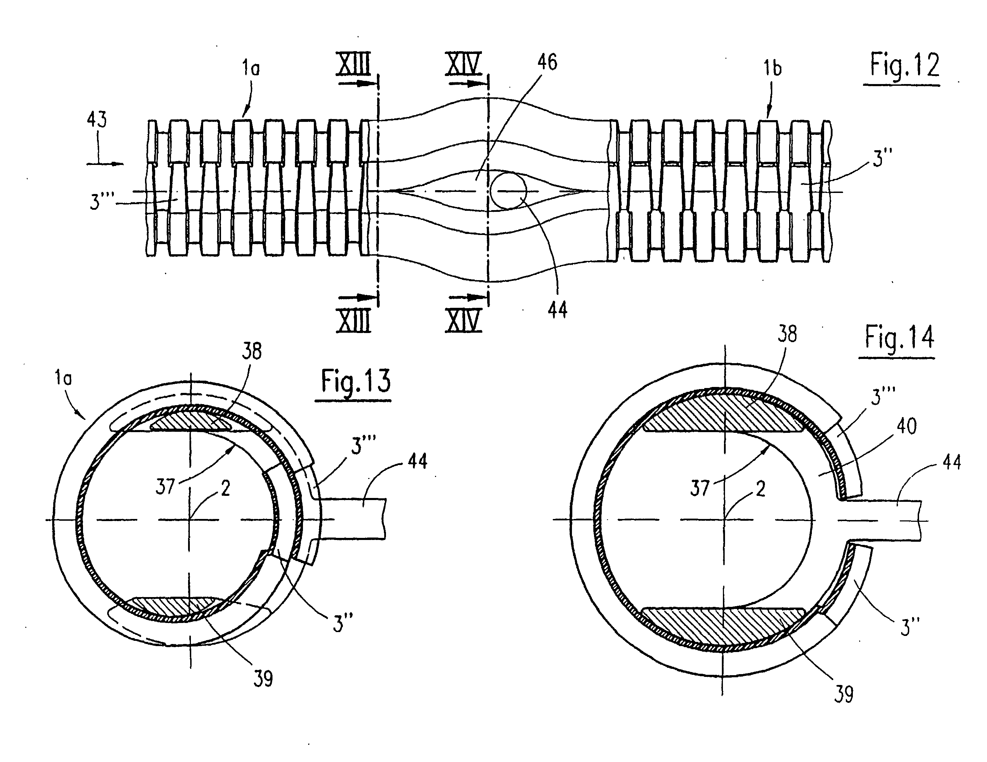

Ein derartiges Montagewerkzeug ist in den Fig. 11, 13, 14 dargestellt. Es hat etwa U-förmigen Querschnitt. Seine Schenkel 38, 39 sind an ihren Außenseiten quer zur Achse 2 konkav gewölbt, wie den Fig. 13, 14 entnehmbar ist; in Richtung der Achse 2 sind sie ebenfalls konkav gewölbt, wie Fig. 11 entnehmbar ist. Die Schenkel sind mittels eines Steges 40 miteinander verbunden. Das Montagewerkzeug 37 weist einen Öffnungs-Abschnitt 41 auf, von dem aus das Wellrohr 1a zum Öffnen auf das Montagewerkzeug 37 aufgeschoben wird. Das entgegengesetzte Ende bildet einen Verriegelungs-Abschnitt 42, mittels dessen das geöffnete Wellrohr 1a zum Wellrohr 1b (siehe Fig. 5 und 6) verschlossen wird. Die Montagerichtung, mit der das Wellrohr 1a auf das Montagewerkzeug 37 aufgeschoben wird, ist in den Fig. 11 und 12 mit dem Montagerichtungs-Pfeil 43 markiert. Etwa mittig ist am Steg 40 ein Halter 44 befestigt, mit dem das Montagewerkzeug 37 ortsfest gehalten oder - bei ortsfest gehaltenem Wellrohr 1a dann entgegen der Montagerichtung 43 - verschoben wird. Im Öffnungs-Abschnitt 41 ist anschließend an den Halter 44 eine zum Ende hin offene Einführöffnung 45 für elektrische Leitungen ausgebildet.

Wie Fig. 11 in Verbindung mit Fig. 13 und 14 entnehmbar ist, ist das Montagewerkzeug 37 so gewölbt, daß das Wellrohr 1a beim Auflaufen auf das Montagewerkzeug 37 in dessen Öffnungs-Abschnitt 41 derart aufgeweitet wird, daß die gewellten Teil-Abschnitte 3" und 3"' aus ihrer in Fig. 10 dargestellten Lage nach außen aufgespreizt werden, und zwar bis in ihre in Fig. 14 dargestellte Lage, in der die freien Enden der gewellten Teil-Abschnitte 3" und 3''' in Umfangsrichtung einen Abstand voneinander haben, der durch die Dicke des Halters 44 vorgegeben ist und in der der gewellte Teil-Abschnitt 3" bereits radial weiter außen liegt als der bei der endgültigen Form des Wellrohres 1b innen liegende gewellte Teil-Abschnitt 3'''. Durch die Einführöffnung 45 werden die zusammengefaßten elektrischen Leitungen 36 während des fortlaufenden Überschiebens des Wellrohres 1a über das Montagewerkzeug 37 mit in das Wellrohr eingeführt, und zwar durch die aus Fig. 12 ersichtliche, durch das Aufspreizen des Wellrohres 1a gebildete Öffnung 46 zwischen den Teil-Abschnitten 3" und 3'''.

Im Verriegelungs-Abschnitt 42 ist die Ausgestaltung des dem gewellten Teil-Abschnitt 3''' zugeordneten Schenkels 38 derart, daß dieser gewellte Teil-Abschnitt 3''' sich radial und in Umfangsrichtung schneller in seine endgültige innenliegende Stellung entspannen kann als der gewellte Teil-Abschnitt 3", wodurch bewirkt wird, daß letzterer über den Teil-Abschnitt 3''' gelangt, wie es insbesondere in den Fig. 5 und 6 dargestellt ist. Hierzu ist zwischen dem Steg 40 und dem Schenkel 38 eine sich in Montagerichtung 43 erweiternde Ausnehmung 47 ausgebildet, die eine schnelle radiale Entspannung des Teil-Abschnittes 3''' zuläßt, während der Teil-Abschnitt 3" noch auf einer radial vorragenden Schulter 48 des Montagewerkzeuges 37 geführt wird.

Durch das Öffnen und Wiederverschließen des Wellrohres wird dessen Übergang von dem ein Zwischenprodukt bildenden Wellrohr 1a in das die endgültige Form aufweisende Wellrohr 1b herbeigeführt. Das Schließen des Wellrohres nach dem Öffnen und dem Einführen der elektrischen Leitungen 36 ergibt sich aus der Elastizität des Wellrohres.

Die beiden gewellten Teil-Abschnitte 3" und 3''' werden in der endgültigen Form des Wellrohres 1b radial zur Achse 2 gegeneinander gepreßt, und zwar aufgrund der Vorspannung, die ihnen durch die Verformung zum Wellrohr 1a gegeben worden ist.

## Patentansprüche

1. Verfahren zur Herstellung eines einteiligen Hüll-Wellrohres aus thermoplastischem elastischem Kunststoff,
- wobei ein warmplastischer Schlauch (20) gebildet wird,
- wobei der Schlauch (20) zu einem über seinen Umfang geschlossenen Wellrohr (1) mit einer Achse (2) verformt wird, das einen durch einen ersten gewellten Teil-Abschnitt (3") und einen zweiten gewellten Teil-Abschnitt (3''') gebildeten, gewellten Abschnitt (3') aufweist, dessen Teil-Abschnitte (3", 3''') so geformt sind, daß bei radialem Übereinanderliegen der erste Teil-Abschnitt (3") radial außen liegt und in den radial innen liegenden zweiten Teil-Abschnitt (3"') eingreift,
- wobei das Wellrohr (1) unter Bildung der gewellten Teil-Abschnitte (3", 3''') parallel zur Achse (2) in einer Schnittebene (17) durchtrennt wird und
- wobei das Wellrohr (1) derart thermisch verformt wird, daß die beiden gewellten Teil-Abschnitte (3", 3"') radial übereinander liegen und sich in Umfangsrichtung überdecken,
**dadurch gekennzeichnet,**
**daß** der erste Teil-Abschnitt (3") und der zweite Teil-Abschnitt (3''') derart thermisch verformt werden, daß der erste Teil-Abschnitt (3") - bezogen auf den zweiten Teil-Abschnitt (3''') - radial innen liegt und die beiden Teil-Abschnitte (3", 3''') einander in Umfangsrichtung überdecken, und
**daß** die Teil-Abschnitte (3", 3''') nach dem Ändern ihrer radialen Lage zueinander in ihrer einander überlappenden Stellung mit radialer Vorspannung gegeneinander anliegen.

2. Verfahren zum Einlegen mindestens einer elektrischen Leitung in ein nach dem Verfahren nach Anspruch 1 hergestelltes Hüll-Wellrohr,
**dadurch gekennzeichnet,**
- **daß** im Bereich der Schnittebene (17) durch elastisches Aufbiegen in Umfangsrichtung der gewellten Teil-Abschnitte (3", 3''') zwischen diesen eine Öffnung (46) gebildet wird,
- **daß** durch die Öffnung (46) mindestens eine elektrische Leitung (36) in das Wellrohr (1a) eingeführt wird und
- **daß** unter Verschließen der Öffnung (46) der erste gewellte Teil-Abschnitt (3") durch elastische Rückstellkräfte des Wellrohres (1a) in Umfangsrichtung und radial außen liegend in Überdeckung mit dem zweiten gewellten Teil-Abschnitt (3") gebracht wird.

## Claims

1. A method of manufacturing a single-piece corrugated jacket pipe of thermoplastic material,
- wherein a thermoplastic tube (20) is formed;
- wherein the tube (20) is deformed, constituting a corrugated pipe (1) which is closed along its circumference and has an axis (2) and which comprises a corrugated section (3') having a first corrugated sub-section (3") and a second corrugated sub-section (3'''), which sub-sections (3", 3"') are shaped such that, when lying radially one upon the other, the first sub-section (3") lies radially outside and engages with the second sub-section (3''') that lies radially inside;
- wherein the corrugated pipe (1) is cut through parallel to the axis (2) in a cutting plane (17), forming the corrugated sub-sections (3", 3'''); and
- wherein the corrugated pipe (1) is thermally deformed such that the two corrugated sub-sections (3", 3''') lie one upon the other radially, coinciding in the circumferential direction;
**characterized**
**in that** the first sub-section (3") and the second sub-section (3''') are thermally deformed such that, related to the second sub-section (3'''), the first sub-section (3") lies radially inside and that the two sub-sections (3", 3''') coincide in the circumferential direction.

2. A method of inserting at least one electric line into a corrugated jacket pipe manufactured according to the method of claim 1,
characterized
- **in that** by the corrugated sub-sections (3", 3''') being bent up elastically in the circumferential direction, an opening (46) is formed therebetween in the vicinity of the cutting plane (17);
- **in that** at least one electric line (36) is inserted in the corrugated pipe (1a) through the opening (46); and
- **in that**, while closing the opening (46), the first corrugated sub-section (3") is moved by elastic restoring forces of the corrugated pipe (1a) into coincidence with the second corrugated sub-section (3''') in the circumferential direction, lying radially outside.

## Revendications

1. Procédé de fabrication d'un tube de gainage ondulé en matière plastique élastique thermoplastique, dans lequel :
- on forme un tuyau (20) plastique à chaud,
- on façonne le tuyau (20) pour réaliser un tube ondulé (1) fermé sur sa périphérie, avec un axe (2), lequel présente un tronçon ondulé (3') formé par un premier tronçon partiel ondulé (3'') et par un deuxième tronçon partiel ondulé (3'''), les tronçons partiels (3'', 3''') étant formés de telle sorte que lorsqu'ils sont situés radialement l'un sur l'autre, le premier tronçon partiel (3'') se trouve radialement à l'extérieur et s'engage dans le deuxième tronçon partiel (3''') se trouvant radialement à l'intérieur,
- le tube ondulé (1) étant sectionné parallèlement à l'axe (2) dans un plan de coupe (17) en formant les tronçons partiels ondulés (3''. 3'''), et
- le tube ondulé (1) étant façonné thermiquement de telle sorte que les deux tronçons partiels ondulés (3''. 3''') sont situés radialement l'un au-dessus de l'autre et se chevauchent en direction périphérique,
**caractérisé en ce que**
le premier tronçon partiel (3'') et le deuxième tronçon partiel (3''') sont façonnés thermiquement de telle sorte que le premier tronçon partiel (3'') se trouve radialement à l'intérieur par rapport au deuxième tronçon partiel (3''') et **en ce que** les deux tronçons partiels (3'', 3''') se chevauchent en direction périphérique, et
**en ce qu'**après avoir changé leur position radiale l'un par rapport à l'autre, les tronçons partiels (3'', 3''') sont appliqués, dans leur position de chevauchement, l'un contre l'autre avec précontrainte radiale.

2. Procédé de pose d'au moins une ligne électrique dans un tube de gainage ondulé fabriqué selon le procédé de la revendication 1,
**caractérisé en ce que**
- dans la région du plan de coupe (17), une ouverture (46) est formée entre les tronçons partiels ondulés (3'', 3''') par le déploiement élastique de ceux-ci en direction périphérique,
- **en ce qu'**au moins une ligne électrique (36) est introduite à travers l'ouverture (46) dans le tube ondulé (1a), et
- **en ce qu'**en fermant l'ouverture (46), le premier tronçon partiel ondulé (3'') est amené par des forces de retour élastiques du tube ondulé (1a) en direction périphérique, radialement à l'extérieur de manière à se chevaucher avec le deuxième tronçon partiel ondulé (3'').
